# EUROPÄISCHE PATENTSCHRIFT

(11) **EP 2 188 155 B1**
(45) Veröffentlichungstag und Bekanntmachung des Hinweises auf die Patenterteilung: **18.01.2012**
(21) Anmeldenummer: 08801065.7
(22) Anmeldetag: 24.07.2008
(51) Int. Cl.: B60R 19/18, F16B 5/02

(54) **VORRICHTUNG ZUR BEFESTIGUNG VON KUNSTSTOFFTEILEN AN EINER KRAFTFAHRZEUGKAROSSERIE**
DEVICE FOR FASTENING PLASTIC PARTS TO A MOTOR VEHICLE BODY
DISPOSITIF DE FIXATION DE PIÈCES EN MATIÈRE PLASTIQUE SUR LA CARROSSERIE D'UN VÉHICULE AUTOMOBILE

(30) Priorität: 16.08.2007 DE 202007011491 U
(43) Veröffentlichungstag der Anmeldung: 26.05.2010
(73) Patentinhaber: Ruia Global Fasteners AG, 41462 Neuss (DE)
(72) Erfinder: SCHRAER, Thorsten, 85305 Jetzendorf (DE)
(74) Vertreter: Beck, Alexander
(86) Internationale Anmeldenummer: PCT/DE2008/001226
(87) Internationale Veröffentlichungsnummer: WO 2009/021483

(56) Entgegenhaltungen:
- DE-A1-102004 050 939

## Beschreibung

Die vorliegende Erfindung betrifft eine Vorrichtung zur Befestigung von Kunststoffteilen an einer Kraftfahrzeugkarosserie mit einem an der Karosserie angebrachten Innengewinde und einer in das Innengewinde eingesetzten Schraube mit einem Außengewinde.

Zur Zeit geht die Kraftfahrzeugentwicklung dahin, Karosserien mehr und mehr gemischt aus Metall- und Kunststoffteilen aufzubauen. Insbesondere wird aus Gewichtsverminderungsgründen angestrebt, die Kotflügel aus Kunststoff herzustellen. Bei der Montage von Kunststoffkotflügeln an einer ansonsten aus Metall bestehenden Karosserie ergibt sich jedoch das Problem, dass der Kunststoffkotflügel bei der Montage an der Metallkarosserie so befestigt werden muss, dass er während der Montage zum Ausgleich von Fertigungstoleranzen (z. B. Spalten) während der Montage in und gegen die Fahrtrichtung (in X-Richtung) sowie auf die Karosserie zu oder von der Karosserie weg (in Y-Richtung) eingestellt werden können muss. Darüber hinaus muss sichergestellt sein, dass die unterschiedlichen Wärmeausdehnungskoeffizienten von Metall und Kunststoff während des Fahrzeuglebens ausgeglichen werden können. Aus diesem Grunde muss der Kotflügel so befestigt werden, dass er einen Spielausgleich nach oben und unten zum Ausgleich thermischer Verformungen der Metallkarosserie, das heißt in Z-Richtung, ausgleichen kann.

Derzeit wird zu diesem Zweck von der Auto-Industrie ein sehr kompliziertes Stahlelement mit mehreren Zusatzelementen eingesetzt, um den Kotflügel an seiner Befestigungsstelle in der Nähe des Fahrzeugbodens und in der Nähe der vorderen Fahrzeugtüre auf Höhe der A-Säule zu befestigen, wobei gleichzeitig der Höhen-Spielausgleich, also der Spielausgleich für thermische Ausdehnung in Z-Richtung, ausgeglichen werden muss.

Im Hinblick auf dieses Problem ist bereits aus der DE 10 2004 050 939 A1 eine Vorrichtung zur Befestigung von Kunststoffteilen an einer Kraftfahrzeugkarosserie mit einem an der Karosserie angebrachten Innengewinde und einer in das Innengewinde eingesetzten Schraube mit einem Außengewinde bekannt, wobei die Schraube mit einem übergroßen Kopf versehen ist und zwischen dem Schraubenkopf und der Karosserie eine zylindrische Buchse angebracht ist, deren Innendurchmesser wesentlich größer ist als der Außendurchmesser des Außengewindes der Schraube, wobei die Buchse eine Scheibe aufweist, deren Außendurchmesser etwa dem Außendurchmesser des Schraubenkopfes entspricht.

Ausgehend von diesem Stand der Technik ist es daher Aufgabe der vorliegenden Erfindung, eine möglichst einfache Vorrichtung zur Befestigung von Kunststoffteilen, insbesondere Kotflügeln, an einer Kraftfahrzeugkarosserie zu schaffen, bei der während der Montage eine Einstellung des Abstandes zwischen Kotflügel und Tür in Fahrtrichtung (X-Richtung) und auf die Karosserie hin (in Y-Richtung), also seitwärts ermöglicht wird, damit der Kotflügel parallel zur Fläche der Tür steht und die erforderlichen Spaltmaße zwischen Kotflügel und Tür eingehalten werden können. Sodann soll der Kotflügel in dieser Stellung fixiert werden können. Dies alles soll möglichst automatisch durch Roboter erledigt werden können. Darüber hinaus muss die erfindungsgemäße Befestigungsvorrichtung einen Spielausgleich nach oben beziehungsweise unten, also in Z-Richtung, erlauben, um die unterschiedliche thermische Ausdehnung zwischen Metallkarosserie und Kunststoffkotflügel auszugleichen.

Erfindungsgemäß wird diese Aufgabe dadurch gelöst, dass an der der Karosserie abgewandten Außenkante der Buchse eine zylindrische Hülse mit ihrer der Karosserie zugewandten Innenkante koaxial angebracht ist, deren Innendurchmesser mit dem Außendurchmesser der Buchse eine Passung bildet und die an ihrem karosserieseitigen Ende in einer sich nach außen erstreckende Scheibe ausläuft, deren Außendurchmesser etwa dem Außendurchmesser des Schraubenkopfes oder der Beilagscheibe entspricht, wobei die Vorrichtung dazu vorgesehen ist, in eine Öffnung in dem Kunststoffteil eingesetzt zu werden, deren Innendurchmesser größer ist als der Außendurchmesser der Hülse, aber geringer als die Außendurchmesser der Beilagscheibe oder des übergroßen Schraubenkopfes und der am Flansch angebrachten Scheibe.

Bevorzugt ist es dabei, dass die Hülse vor der Montage über einen dünnen Grat mit der Buchse verbunden ist, der bei Belastung in Axialrichtung der Hülse bricht. Auf diese Weise sind Hülse und Buchse unverlierbar miteinander verbunden, was Lagerhaltung, Handling und Montage erheblich vereinfacht.

Alternativ dazu kann die Hülse vor der Montage durch Verkleben mit der Buchse verbunden sein, wobei die Verklebung dergestalt ausgeführt ist, dass die Verklebung bei Belastung in Axialrichtung der Hülse bricht. Diese Lösung ist vorzuziehen, wenn Hülse und Buchse separat gefertigt werden sollen.

Außerdem kann die Hülse bereits vor der Montage mit einem Presssitz auf der Buchse gehalten sein.

Um die Einstellung des Kotflügels in Richtung auf die Fahrzeugkarosserie hin oder von dieser weg (in Y-Achse) festzuhalten und zu sichern, ist es bevorzugt, wenn die Schraube mit dem in der Karosserie angeordneten Innengewinde eine klemmende Schraubensicherung bildet. Aufgrund der einfachen Herstellung und der günstigen Kosten ist es bevorzugt, Buchse und Hülse aus Stahl herzustellen.

Um die erfindungsgemäße Vorrichtung an dem Kotflügel vorzumontieren, ist es besonders bevorzugt, die Schraube vor der Montage mittels einer an dem vom Schraubenkopf abgewandten Ende des Außengewindes außerhalb der Buchse auf das Außengewinde aufgesetzten, sternförmig ausgestanzten Beilagscheibe mit einem größeren Durchmesser als die Buchse in der Buchse zu halten. Auf diese Weise kann die erfindungsgemäße Vorrichtung am Kotflügel angebracht werden und bei der Karosserieendmontage zusammen mit dem Kotflügel an der Karosserie angebracht werden, was Handhabung und Lagerhaltung erheblich vereinfacht.

Alternativ dazu kann die Schraube vor der Montage auch mittels eines an dem vom Schraubenkopf abgewandten Ende des Au-βengewindes auf das Außengewinde aufgespritzten Kunststoffringes oder Schaumgummis mit einem größeren Durchmesser als die Buchse in der Buchse gehalten sein. Auch dies erlaubt eine Vormontage am Kotflügel vor der Endmontage des Kotflügels an der Karosserie.

Eine besonders preisgünstige Herstellung der erfindungsgemäßen Vorrichtung ergibt sich, wenn Buchse und Hülse mittels eines Kaltverformungsprozesses gemeinsam aus einem Rohling hergestellt sind.

Eine ebenfalls besonders preisgünstige Herstellung der erfindungsgemäßen Vorrichtung ergibt sich, wenn Buchse und Hülse aus Kunststoff hergestellt sind. Dabei kann die Herstellung noch weiter vereinfacht werden, indem Buchse und Hülse gemeinsam in einen Spritzgießprozess als Einspritzgießteil hergestellt sind.

Die vorliegende Erfindung wird im folgenden anhand des in den Zeichnungen dargestellten Ausführungsbeispieles näher erläutert. Es zeigt:
Figur 1 eine Schnittdarstellung einer erfindungsgemäßen Vorrichtung zur Befestigung von Kunststoff-Kotflügeln an einer Kraftfahrzeugkarosserie zu Beginn des Montagevorgangs; und
Figur 2 die Vorrichtung gemäß Figur 1 während des Montagevorgangs, wobei durch Pfeile die verschiedenen Spielausgleichsmöglichkeiten in X-, Y- und Z-Richtung angegeben sind.

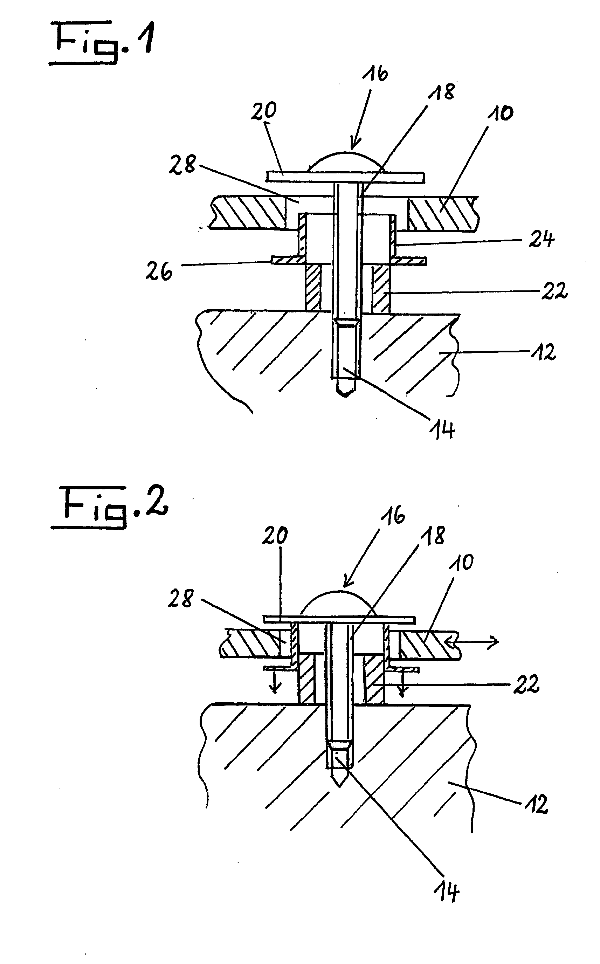

Figur 1 zeigt die erfindungsgemäße Vorrichtung zur Befestigung von Kunststoffkotflügeln an einer Kraftfahrzeugkarosserie zu Beginn der Montage des Kotflügels 10 an der Karosserie 12. Zum Zwecke der Befestigung des Kotflügels 10 ist in der Karosserie 12 ein Innengewinde 14 vorgesehen. In der Darstellung der Figur 1 beginnt gerade das Einschrauben der Schraube 16 in dieses Innengewinde 14. Zu diesem Zweck ist die Schraube 16 mit einem Außengewinde 18 versehen. Um den Kotflügel 10 zu halten, ist die Schraube 16 im vorliegenden Fall mit einem übergroßen Kopf 20 versehen. Stattdessen könnte auch eine normale Schraube mit einer zusätzlichen Beilagscheibe geeigneten Durchmessers vorgesehen sein.

Dieser Schraubenkopf 20 beziehungsweise die Beilagscheibe hält den Kotflügel 10 nach der Montage gegen Kräfte, die in der Zeichnung in Richtung nach oben wirken.

Zwischen dem Kotflügel 10 und der Karosserie 12 ist dabei das entscheidende Teil der erfindungsgemäßen Vorrichtung eingesetzt. Es handelt sich dabei um eine hohlzylindrische, an beiden Stirnseiten offene Buchse 22, an deren von der Karosserie abgewandten Außenkante eine zylindrische Hülse 24 vorzugsweise über einen dünnen Grat oder durch Verkleben oder mittels einer Presspassung angebracht ist. Diese Hülse 24 ist ebenfalls als Hohlzylinder mit offenen Stirnseiten ausgeführt, wobei der Innendurchmesser der Hülse 24 geringfügig größer ist als der Außendurchmesser der Buchse 22. Die Höhe der Hülse 24 entspricht vorzugsweise etwa der Höhe der Buchse 22. Karosserieseitig läuft die Hülse 24 nach außen in eine Scheibe 26 aus, die in montiertem Zustand eine Bewegung des Kotflügels 10 gegenüber der Karosserie 12 in der auf der Zeichnung nach unten verlaufenden Richtung verhindert. Hülse 24 und Buchse 22 bestehen dabei vorzugsweise aus Stahl, besonders bevorzugt ist ein Herstellungsverfahren, bei dem Buchse und Hülse mittels eines einzigen Kaltverformungsprozesses gemeinsam aus einem Rohling hergestellt werden. Dabei empfehlen sich besonders Herstellungsverfahren, wie sie bereits zur Herstellung von Blindnietmuttern bekannt sind.

Will man die Schraube vor der Montage an der Vorrichtung sichern oder will man die Vorrichtung vor der Montage des Kotflügels an der Karosserie an dem Kotflügel unverlierbar befestigen, so empfiehlt es sich, die Schraube mittels einer an dem vom Schraubenkopf abgewandten Ende des Außengewindes 18 außerhalb der Buchse 22 auf das Außengewinde 18 aufgesetzten, sternförmig ausgestanzten Beilagscheibe mit einem größeren Durchmesser als die Buchse 22 in der Buchse 22 zu halten.

Alternativ dazu kann die Schraube auch mittels einer an dem vom Schraubenkopf 20 abgewandten Ende des Außengewindes 18 auf das Außengewinde 18 aufgespritzten Kunststoffringes oder Schaumgummis mit einem größeren Durchmesser als die Buchse 22 in der Buchse gehalten sein.

Anhand von Figur 2 sollen nun die Vorgänge bei der Montage der erfindungsgemäßen Vorrichtung und der mögliche Spielausgleich durch die erfindungsgemäße Vorrichtung erläutert werden.

Figur 2 zeigt den Zustand nach teilweiser Montage. Die Schraube 16 ist schon zu einem großen Teil in das Innengewinde 14 eingeschraubt, der Kotflügel 10 ist zwischen dem vergrößerten Schraubenkopf 20 beziehungsweise einer entsprechenden Beilagscheibe und der an der Hülse 24 angebrachten Scheibe 26 mit Spiel gehalten, wobei in dem Kotflügel 10 eine Öffnung 28 vorgesehen ist, deren Innendurchmesser deutlich größer ist als der Außendurchmesser der Hülse 24 jedoch kleiner als der Außendurchmesser der Scheibe 26 und des vergrößerten Schraubenkopfes 20 beziehungsweise einer entsprechenden Beilagscheibe.

Auf diese Weise bleibt das erforderliche Spiel in X- beziehungsweise Z-Richtung sowohl zwischen dem Kotflügel 10 und der Hülse 24 als auch durch das Spiel zwischen dem Außendurchmesser des Außengewindes 18 der Schraube 16 und dem wesentlich größeren Innendurchmesser der Buchse 22 erhalten. Die Einstellung in Y-Richtung, also auf die Karosserie hin beziehungsweise von der Karosserie weg kann dadurch eingestellt werden, wie weit die Schraube 16 in das Innengewinde 14 hineingedreht wird. Sobald nämlich die Schraube 16 mit der Hülse 24 in Anlage gekommen ist, und sodann weitergedreht wird, bricht der dünne Grat zwischen der Hülse 24 und der Buchse 22 beziehungsweise eine dort vorgesehene Klebverbindung. Alternativ kann die Hülse 24 mittels eines Presssitzes auf der Buchse 22 gehalten sein. Die Hülse 24 schiebt sich sodann bei weiterem Anziehen der Schraube 16 über die Mantelfläche der Buchse 22. Dieser Prozess wird gestoppt sobald das Einschrauben der Schraube 16 beendet wird. Auf diese Weise wird der Kotflügel in Y-Richtung eingestellt.

In dem Zustand gemäß Figur 1 war auch noch eine Verstellung nach hinten und vorne, das heißt in X-Richtung möglich, um das Spaltmaß zwischen Kotflügel und Tür genau einzustellen. Dieses Spiel ergab sich zwischen dem Außendurchmesser des Au-βengewindes 18 und dem wesentlich größer gewählten Innendurchmesser der Buchse 22. Wenn die Schraube 16 jedoch hinreichend angezogen wird, so genügt die über die Hülse 24 und die Buchse 22 auf die Karosserie 12 übertragene Vorspannkraft, um die erfindungsgemäße Vorrichtung in der einmal eingestellten Position zu halten. Führt man die Öffnung 28 als Langloch in geeigneter Richtung aus, so kann man aber dennoch das zum Ausgleich der unterschiedlichen Wärmeausdehnung erforderliche Spiel in Z-Richtung zwischen dem Außendurchmesser der Hülse 24 und dem Innendurchmesser des Loches oder Langloches 28 in dem Kotflügel 10 beibehalten.

Der besondere Vorteil der vorliegenden Erfindung liegt darin, dass nur ein Element, nämlich die Zusammensetzung aus Buchse 22 und Hülse 24 erforderlich ist, welches gegebenenfalls mit bekannten Fertigungsverfahren mittels eines einzigen Kaltverformungsprozesses aus einem Rohling hergestellt werden kann, benötigt wird und dass die entsprechende Einstellung und Befestigung mit lediglich einem Montageschritt, nämlich dem Festziehen der Schraube 16 erreicht wird. Darüber hinaus ist die erfindungsgemäße Vorrichtung sehr preisgünstig herzustellen, da sie wie gesagt mittels eines Kaltverformungsprozesses aus einem Rohling hergestellt werden kann.

Entsprechende Herstellungsverfahren sind beispielsweise aus der Herstellung von Blindnietmuttern bekannt. Es wird dafür üblicherweise ein Unterschneidungs-Schmiedewerkzeug oder ein zusätzlicher Schneidevorgang wie bei Schrauben mit kegelförmiger Spitze vorgesehen. Darüber hinaus ist nur noch eine Schraube mit vergrößertem Kopf beziehungsweise eine Standardschraube mit einer geeigneten Beilagscheibe erforderlich. Darüber hinaus kann die erfindungsgemäße Befestigungsvorrichtung auf dem Kotflügel vormontiert werden, indem man die Schraube in die Kombination aus Buchse und Hülse steckt, und die Schraube dort mittels einer dort aufgesetzten, sternförmig ausgestanzten Beilagscheibe mit einem größeren Durchmesser als die Buchse 22 oder mittels eines an geeigneter Stelle auf das Außengewinde aufgespritzten Kunststoffringes befestigt. Entsprechende sternförmig ausgestanzte Beilagscheiben sind bereits unter der Bezeichnung "Starlok^{®}" auf dem Markt erhältlich. Gleiches gilt für die aufgespritzten Kunststoffringe, welche unter der Bezeichnung "Nystop^{®}" bekannt sind.

Es ergeben sich also mit der vorliegenden Erfindung folgende Vorteile:
Es ist nur ein Element zum Toleranzausgleich, zur Sicherstellung des Spiels zum Ausgleich thermischer Spannungen und zum Befestigen des Kotflügels erforderlich. Die erfindungsgemäße Lösung ist dadurch deutlich billiger, insbesondere, da ein lediglich ein mittels eines bekannten Kaltverformungsverfahrens oder Spritzgießverfahrens hergestelltes Teil erforderlich ist.

Bevorzugt kann die Zusammensetzung aus Buchse (22) und Hülse (24) auch aus Kunststoff hergestellt sein. Dabei ist es zur Vereinfachung der Fertigung besonders bevorzugt, wenn Buchse und Hülse in einem Spritzgießprozess als Einspritzgießteil hergestellt sind.

Auch die Befestigung des Kotflügels an der Karosserie wird durch die vorliegende Erfindung deutlich erleichtert. Die Befestigung kann nämlich mittels eines einzigen Montageschrittes, nämlich durch Anziehen der Schraube erfolgen, wobei die Einstellung in Y-Richtung dadurch erfolgt, wie weit die Schraube angezogen wird.

Darüber hinaus kann die erfindungsgemäße Vorrichtung am Kotflügel vormontiert werden, was Lagerhaltung und Handhabung erheblich erleichtert.

Abschließend ist festzuhalten, dass durch die vorliegende Erfindung mittels eines einzigen Elementes, nämlich der einstückig herstellbaren Kombination aus Buchse 22 und Hülse 24 die Befestigungs-Einstellung und Wärmespielausgleichsfunktionen verwirklicht werden können.

## Patentansprüche

1. Vorrichtung zur Befestigung von Kunststoffteilen (10) an einer Kraftfahrzeugkarosserie (12) mit einem an der Karosserie (12) angebrachten Innengewinde (14) und einer in das Innengewinde (14) eingesetzten Schraube (16) mit einem Außengewinde (18), wobei die Schraube (16) mit einem übergroßen Kopf (20) oder einer entsprechenden Beilagscheibe versehen ist, wobei zwischen dem Schraubenkopf (20) und der Karosserie (12) eine zylindrische Buchse (22) angebracht ist, deren Innendurchmesser wesentlich größer ist als der Außendurchmesser des Außengewindes (18) der Schraube (16), **dadurch gekennzeichnet, dass** an der der Karosserie (12) abgewandten Außenkante der Buchse (22) eine zylindrische Hülse (24) mit ihrer der Karosserie (12) zugewandten Innenkante koaxial angebracht ist, deren Innendurchmesser mit dem Außendurchmesser der Buchse (22) eine Passung bildet und die an ihrem karosserieseitigen Ende in eine sich nach außen erstreckende Scheibe (26) ausläuft, deren Außendurchmesser etwa dem Außendurchmesser des Schraubenkopfes (20) oder der Beilagscheibe entspricht, wobei die Vorrichtung dazu vorgesehen ist, in eine Öffnung (28) in dem Kunststoffteil (10) eingesetzt zu werden, deren Innendurchmesser größer ist als der Außendurchmesser der Hülse (24) aber geringer als die Außendurchmesser der Beilagscheibe oder des übergroßen Schraubenkopfes (20) und der an der Hülse (24) angebrachten Scheibe (26).

2. Vorrichtung nach Anspruch 1, **dadurch gekennzeichnet, dass** die Hülse (24) vor der Montage über einen dünnen Grat mit der Buchse (22) verbunden ist, der bei Belastung in Axialrichtung der Hülse (24) bricht.

3. Vorrichtung nach Anspruch 1, **dadurch gekennzeichnet, dass** die Hülse (24) vor der Montage durch Verkleben mit der Buchse (22) verbunden ist, wobei die Verklebung dergestalt ausgeführt ist, dass die Verklebung bei Belastung in Axialrichtung der Hülse (24) bricht.

4. Vorrichtung nach Anspruch 1, **dadurch gekennzeichnet, dass** die Hülse (24) bereits vor der Montage mit einem Presssitz auf der Buchse (22) gehalten ist.

5. Vorrichtung nach einem der Ansprüche 1 bis 4, da durch gekennzeichnet, dass die Schraube (16) mit dem in der Karosserie (12) angeordneten Innengewinde (14) eine klemmende Schraubensicherung bildet.

6. Vorrichtung nach einem der Ansprüche 1 bis 5, **dadurch gekennzeichnet, dass** Buchse (22) und Hülse (24) aus Stahl bestehen.

7. Vorrichtung nach einem der Ansprüche 1 bis 6, **dadurch gekennzeichnet, dass** die Schraube (16) vor der Montage mittels einer an dem vom Schraubenkopf (20) abgewandten Ende des Außengewindes (18) außerhalb der Buchse (22) auf das Außengewinde (18) aufgesetzten, sternförmig ausgestanzten Beilagscheibe mit einem größeren Durchmesser als die Buchse (22) in der Buchse (22) gehalten ist.

8. Vorrichtung nach einem der Ansprüche 1 bis 5, **dadurch gekennzeichnet, dass** die Schraube (16) vor der Montage mittels eines an dem vom Schraubenkopf (20) abgewandten Ende des Au-βengewindes (18) auf das Außengewinde (18) aufgespritzten Kunststoffringes oder Schaumgummis mit einem größeren Durchmesser als die Buchse (22) in der Buchse (22) gehalten ist.

9. Vorrichtung nach einem der Ansprüche 1 bis 7, **dadurch gekennzeichnet, dass** Buchse (22) und Hülse (24) mittels eines Kaltverformungsprozesses gemeinsam aus einem Rohling hergestellt sind.

10. Vorrichtung nach einem der Ansprüche 1 bis 5, **dadurch gekennzeichnet, dass** Buchse (22) und Hülse (24) aus Kunststoff bestehen.

11. Vorrichtung nach Anspruch 10, **dadurch gekennzeichnet, dass** Buchse (22) und Hülse (24) mittels eines Spritzgießprozesses als ein Spritzgießteil hergestellt sind.

## Claims

1. Device for fastening plastics material parts (10) to a motor vehicle body (12) having an internal thread (14), which is attached to the body (12), and a screw (16), which has an external thread (18) and is inserted into the internal thread (14), the screw (16) being provided with an oversized head (20) or a corresponding washer, a cylindrical socket (22) being attached between the screw head (20) and the body (12), the internal diameter of said cylindrical socket being significantly larger than the external diameter of the external thread (18) of the screw (16), **characterised in that** a cylindrical sleeve (24) is attached coaxially to the outer edge of the socket (22), which faces away from the body (12), by means of the inner edge of said sleeve, which faces towards the body (12), the internal diameter of said cylindrical sleeve (24) forming a fit with the external diameter of the socket (22) and said cylindrical sleeve (24) ending at its body-side end in an outwardly extending disc (26), the external diameter of which approximately corresponds to the external diameter of the screw head (20) or the washer, the device being provided so as to be received in an opening (28) in the plastics material part (10), the internal diameter of said opening being larger than the external diameter of the sleeve (24) but smaller than the external diameter of the washer or the oversized screw head (20) and of the disc (26) which is attached to the sleeve (24).

2. Device according to claim 1, **characterised in that** before mounting, the sleeve (24) is connected to the socket (22) by a narrow seam, which breaks under a load in the axial direction of the sleeve (24).

3. Device according to claim 1, **characterised in that** before mounting, the sleeve (24) is connected to the socket (22) by gluing, the glued connection being configured such that said glued connection breaks under a load in the axial direction of the sleeve (24).

4. Device according to claim 1, **characterised in that** before mounting, the sleeve (24) is already held on the socket (22) by press fit.

5. Device according to any one of claims 1 to 4, **characterised in that** the screw (16) together with the internal thread (14) arranged in the body (12) creates a clamping, screw-locking effect.

6. Device according to any one of claims 1 to 5, **characterised in that** the socket (22) and the sleeve (24) are composed of steel.

7. Device according to any one of claims 1 to 6, **characterised in that** before mounting, the screw (16) is held in the socket (22) by means of a star-shaped punched washer, which has a larger diameter than the socket (22) and is attached to the external thread (18) at the end of the external thread (18) facing away from the screw head (20) outside the socket (22).

8. Device according to any of the claims 1 to 5, **characterised in that** before mounting, the screw (16) is held in the socket (22) by means of a plastics material ring or foam rubber, which has a larger diameter than the socket (22) and is injection moulded onto the external thread (18) at the end of the external thread (18) facing away from the screw head (20).

9. Device according to any one of claims 1 to 7, **characterised in that** the socket (22) and the sleeve (24) are jointly produced from one blank by means of a cold forming process.

10. Device according to any one of claims 1 to 5, **characterised in that** the socket (22) and the sleeve (24) are composed of plastics material.

11. Device according to claim 10, **characterised in that** the socket (22) and the sleeve (24) are produced as one injection-moulded part by an injection moulding process.

## Revendications

1. Dispositif de fixation de pièces en matière artificielle (10) sur une carrosserie de véhicule automobile (12) au moyen d'un filetage intérieur (14) monté sur la carrosserie (12) et d'une vis (16) avec un filetage extérieur (18) qui est insérée dans le filetage intérieur (14), la vis (16) étant pourvue d'une tête surdimensionnée (20) ou d'une rondelle de serrage correspondante, une douille cylindrique (22), dont le diamètre intérieur est nettement supérieur au diamètre extérieur du filetage extérieur (18) de la vis (16), étant montée entre la tête de vis (20) et la carrosserie (12), **caractérisé en ce que** sur l'arête extérieure opposée à la carrosserie (12) de la douille (22) est monté de façon coaxiale, avec son arête intérieure tournée vers la carrosserie (12), un tube cylindrique (24), dont le diamètre intérieur forme un ajustage avec le diamètre extérieur de la douille (22), et qui se termine à son extrémité côté carrosserie par une rondelle (26) s'étendant vers l'extérieur, rondelle, dont le diamètre extérieur correspond à peu près au diamètre extérieur de la tête de vis (20) ou de la rondelle de serrage, le dispositif étant destiné à être inséré dans une ouverture (28) dans la pièce en matière artificielle (10), dont le diamètre intérieur est supérieur au diamètre extérieur de la douille (24), mais inférieur au diamètre extérieur de la rondelle de serrage ou de la tête de vis surdimensionnée (20) et de la rondelle (26) montée sur la douille (24).

2. Dispositif suivant la revendication 1, **caractérisé en ce qu'**avant le montage, le tube (24) est relié via un mince pont à la douille (22) qui se rompt en cas de sollicitation du tube (24) dans le sens axial.

3. Dispositif suivant la revendication 1, **caractérisé en ce qu'**avant d'être monté le tube (24) est relié à la douille (22) par collage, le collage étant réalisé de façon qu'il se rompt en cas de sollicitation du tube (24) dans le sens axial.

4. Dispositif suivant la revendication 1, **caractérisé en ce que** la douille (22) est tenue sur le tube (24) au moyen d'un ajustage à la presse avant d'être montée.

5. Dispositif suivant une des revendications 1 à 4, **caractérisé en ce que** la vis (16) et le filetage intérieur (14), qui est disposé dans la carrosserie (12), forment un arrêt d'écrou.

6. Dispositif suivant une des revendications 1 à 5, **caractérisé en ce que** la douille (22) et le tube (24) sont en acier.

7. Dispositif suivant une des revendications 1 à 6, **caractérisé en ce qu'**avant le montage, la vis (16) est tenue dans la douille (22) au moyen d'une rondelle de serrage découpée en forme d'étoile avec un diamètre supérieur à la douille (22), rondelle de serrage qui est rapportée, à l'extérieur de la douille (22), sur le filetage extérieur (18), à l'extrémité opposée à la tête de vis (20) de celui-ci.

8. Dispositif suivant une des revendications 1 à 5, **caractérisé en ce qu'**avant le montage, la vis (16) est tenue dans la douille (22) au moyen d'un anneau en matière artificielle ou d'un caoutchouc mousse, dont le diamètre est supérieur à celui de la douille, appliqué par projection sur le filetage extérieur (18), à l'extrémité opposée à la tête de vis de celui-ci.

9. Dispositif suivant une des revendications 1 à 7, **caractérisé en ce que** la douille (22) et le tube (24) sont fabriqués ensemble à partir d'une ébauche à l'aide d'un processus de travail à froid.

10. Dispositif suivant une des revendications 1 à 5, **caractérisé en ce que** la douille (22) et le tube (24) sont en matière artificielle.

11. Dispositif suivant la revendication 10, **caractérisé en ce que** la douille (22) et le tube (24) sont fabriqués comme pièce moulée par injection au moyen d'un processus de moulage par injection.
